# EUROPEAN PATENT APPLICATION

(11) **EP 1 345 143 A1**
(43) Date of publication of application: **17.09.2003**
(21) Application number: 02251755.1
(22) Date of filing: 12.03.2002
(51) Int. Cl.: G06F 17/60, G06F 3/033, G06T 17/50, G09B 29/00

(54) **Customized map specification**

(71) Applicant: The Secretary of State for the Department of Transport, Local Government and the Regions, Maybush, Southampton SO16 4GU (GB)
(72) Inventor: Rowles, Justin, Southampton Hampshire SO14 6SA (GB)
(74) Representative: Harris, Ian Richard

(57) **Abstract**

A graphical user interface provides for the specification of customised maps on a computer system. A user can select a centre for a proposed map. An overview representation of the proposed map and a border around the proposed map is generated. Also generated is a detailed representation for an indicated part of the first representation. The user can change the part of the overview representation that is reproduced in the detailed representation in order to investigate the extent of the proposed map. In this manner, the user can investigate the exact extent of the proposed map in real time, as it is not necessary to calculate all the data for the complete map. The complete map can then be generated off-line following confirmation by the user of the parameters of the proposed map.

## Description

### BACKGROUND OF THE INVENTION

The invention relates to the computer generation of maps, for example to the generation of maps on-line.

In order to generate maps by computer, it is necessary to store and manipulate large amounts of data. The data can be stored, for example, in what is essentially a raster (scanned-line) format. In order to reduce the data required for storage, the map data can be stored, for example, in a compressed form, for example using run length encoding or another compression technique. Alternatively, data can be stored in vector format, for example as a hierarchy of objects, where each object represents an aspect of the maps (e.g. a symbol for map), or in a structured or polygonised format where there is a structured relationship between the vectors.

Conventionally, maps used to be available in hard copy (printed) form only, and the maps that were available were printed as a series. As many people will have experienced, often areas for which one would wish a map are located at the boundary between multiple printed maps, so that a customer would be forced to buy multiple maps in order to cover a desired area.

More recently, it has become possible to order maps centred on a particular location, for example, based on a grid reference or a postal code. However when ordering such a map, the customer is typically not certain as to the extent of the map that he or she would be purchasing.

Mapping systems are available on-line, whereby one can access and download map information, for example as a part of a direction finding service. However, due to limitations of processing power, and Internet bandwidth, of the server and client systems, the exact specification of a map that a customer desires is somewhat of a hit and miss operation.

The present invention seeks to provide an improved graphical user interface, computer system and method for user specification and generation of customised computer generated maps.

### SUMMARY OF THE INVENTION

Particular aspects of the invention are set out in the accompanying claims.

An aspect of the invention provides a graphical user interface for the specification of customised maps on a computer system. The graphical user interface is operable to enable user selection of a centre for a proposed map. It is further operable to generate, for display to the user, at least a first representation in a first scale giving an overview of the extent of the proposed map plus a border region around the proposed map, and a second representation in a second scale giving a detailed view of the content of a sample area of the first representation, the first representation including an indication of the location of the sample area. It is also operable, in response to user input, to move the indication of the sample area within the first representation and to display within the second representation the detailed view of the moved sample area.

The provision of a graphical display with the first and second representations enables a client to understand the overall extent of the proposed map as well as an indication of the detail of the map without the computer system needing to calculate all the data for the complete map. To generate the data for a complete map could take a significant amount of time, possibly running into minutes. The use of the two representations means that the user can be given a good idea of the map that has been selected within a very short time, even where the user is at a client computer and the graphical user interface and the map data are generated at a server on a network, for example a web server accessible via the Internet. Moreover, the generation of the first representation with a bordering area around the proposed map and the possibility to move the area covered by the second representation within the total area covered by the first representation enables the user to explore this region in an efficient manner to check that the extent of the proposed map covers the area intended by the user is that truly intended. Once again the graphical interface of the present invention enables this to be achieved in an efficient manner, merely requiring a change to the indicator of the area covered by the second representation and the content of the second representation.

Accordingly, the present invention addresses the technical problems of enabling the specification of a map to be generated by a computer system that is based on a selectable centre in a manner that enables a user to verify the specification and extent of the map in an efficient manner, taking into account finite processing resources and bandwidths, particularly, but not exclusively, in the context of an on-line implementation.

The first scale can be at a smaller scale than a scale for the proposed map and the second scale can be a larger scale than the first scale, for example the same scale as the proposed map. In one example, the proposed map is a 1:50,000-scale map. Also, the first representation can include reduced detail with respect to the proposed map and the second representation can include more detail than the first representation, for example the same level of detail as the proposed map.

A boundary between the extent of the proposed map and the border region can be displayed on the first representation. Alternatively, or in addition, the border region can be displayed in a contrasting manner to the extent of the proposed map on the first representation. For example the border region can be shaded.

The graphical user interface can further be operable to enable user selection of content for a presentation area for the proposed map. For example the graphical user interface can be operable to enable user selection of one or more of a title for the presentation area, an image for the presentation area and a language for legends for the presentation area. The graphical user interface can further be operable to enable user selection of one or more parameters for content types for the proposed map. The content types can be defined by vector data, or structured or polygonised data for generation of the proposed map according to a data type. In such a case, the graphical user interface can be further operable to modify the second representation to reflect the user-selected parameters.

The graphical user interface can be further operable to enable user confirmation of the order for the proposed map and to initiate sending of a message to a print server. The graphical user interface can further be operable to provide a link to a secure server for the input of payment information.

A computer program can be operable to implement the graphical user interface. The computer program can be carried on a carrier medium.

Another aspect of the invention provides a computer system for customised map generation, the computer system implementing the aforementioned graphical user interface. The computer system can include a web server hosting a website, the web server being connected to a network for connection to at least one client computer via the network, the web server defining the graphical user interface and responding to operations effected by the user at a client computer. The computer system can further include a print server, the web server being operable to respond to user confirmation of the order for the proposed map by sending a message to the print server defining the parameters of a proposed map to be printed. The print server can be remote from the web server. The computer system can further include a secure server operable to process client payments, the secure server being operable to confirm completion of payment operations for authorising commencement of the printing of the proposed map by the print server. User input and displaying to a user can be effected on a client computer connected to the server computer via a network (e.g., the Internet).

A further aspect of the invention provides a method of generating a customised computer generated map, which method includes steps of:
responding to user selection of a centre for a proposed map to access data storage and to determine data for generating a proposed map;
displaying to the user, using the graphical user interface, at least the first representation in a first scale giving an overview of the extent of the proposed map plus a border region around the proposed map, and the second representation in a second scale giving a detailed view of the content of a sample area of the first representation, the first representation including an indication of the location of the sample area; and
responding to user input to move the indication of the sample area within the first representation and to display within the second representation the detailed view of the moved sample area.

The method can further include responding to user confirmation of an order for a proposed map to initiate the generation of the map. Confirmation of the order can include supplying payment information. Initiation of the generation of the map can be effected, for example, on confirmation of payment for the order.

The method can be implemented by a computer program supplied on a carrier medium.

### BRIEF DESCRIPTION OF THE DRAWINGS

Embodiments of the present invention are described hereinafter, by way of example only, with reference to the accompanying drawings in which like reference signs relate to like elements and in which:
Figure 1 is a schematic representation of an example of a network environment in which an embodiment of the invention may be implemented;
Figure 2 is a schematic representation of a computer on which an embodiment of the invention may be implemented;
Figure 3 is a schematic representation of the configuration of software on the computer of Figure 2;
Figure 4 is an overview of an example of an implementation of a print on demand map delivery system;
Figures 5A and 5B are schematic representations of web pages illustrating a user selection of a map centre;
Figures 6A and 6B are schematic representations of web pages illustrating the use of first and second representations of a proposed map;
Figure 7 is a schematic representation of a web page for user selection of parameters of a proposed map;
Figure 8 is a schematic representation of a printed map including a presentation area;
Figure 9 is a web page enabling user selection of a custom map type; and
Figures 10A, 10B and 10C form a flow diagram illustrating examples of operation of the described system.

### DESCRIPTION OF PARTICULAR EMBODIMENTS

A particular embodiment of the invention will be described hereinafter in the context of the ordering and generation of a user-customised map over a network such as the Internet.

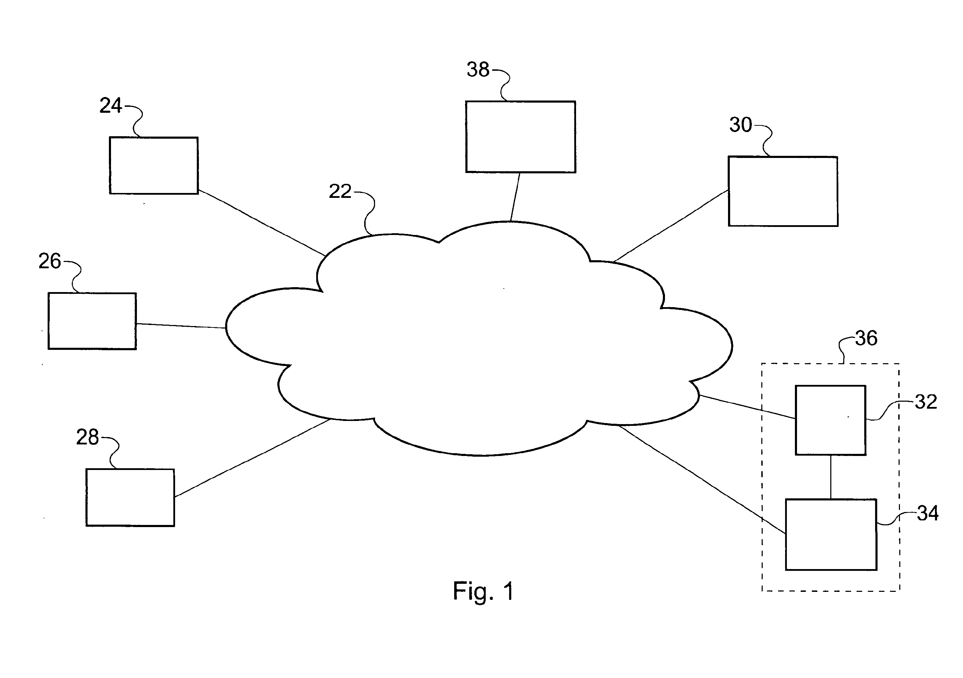

Figure 1 illustrates a network (for example, the Internet) 22, to which a number of client computers 24, 26 and 28 are connected. Also connected is a computer server forming a web server 30. Computer server systems at a fulfilment house 36, including a secure server 32 and a map generating server (e.g. a print server) 34 are also connected to the network 22. A computer 38 of a banking institution is also connected to the network 22. The arrangement shown in Figure 1 is a schematic one for illustrative purposes only.

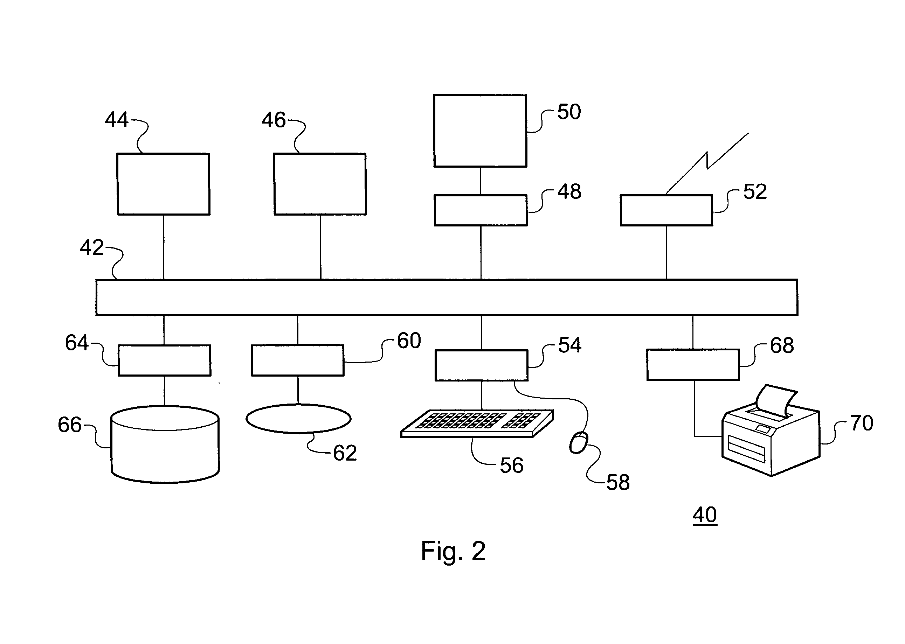

Figure 2 is schematic block diagram illustrating an exemplary configuration of a computer 40 for forming one of the computers 24, 26, 28, 30, 32, 34 and 38, for example, of Figure 1. The computer 40 includes a bus system 42 that can include one or more buses to which a number of units are connected. A processor (CPU) 44 is connected to the bus system 42. Main memory 46 for holding computer programs and data is also connected to the bus 42 and is accessible to the processor. A display adapter 48 connects a display 46 to the bus 42. A communications interface 52, for example a network interface or a telephonic interface such as a modem, ISDN or optical interface, enables the computer 40 to be connected to the network 20. An input device interface 54 connects one or more input devices, for example a keyboard 56 and a mouse 58, to the bus 42. A drive interface 60 provides access to a media drive 62. A further interface 64 provides access to a database system 66 that contains map data for generating maps. Further interfaces, for example a printer interface 68 for connection of a printer 70, may also be provided. Indeed, it will be appreciated that Figure 2 provides merely an exemplary overview of a possible configuration of a computer 40, and that each computer could have any conventional form. Indeed, the client computers 24, 26 and 28, the web server 30, and the computers 32 and 34 of the fulfilment house and the computer 38 of the financial institution may be not simply a single computer but may each be formed by a network of computers.

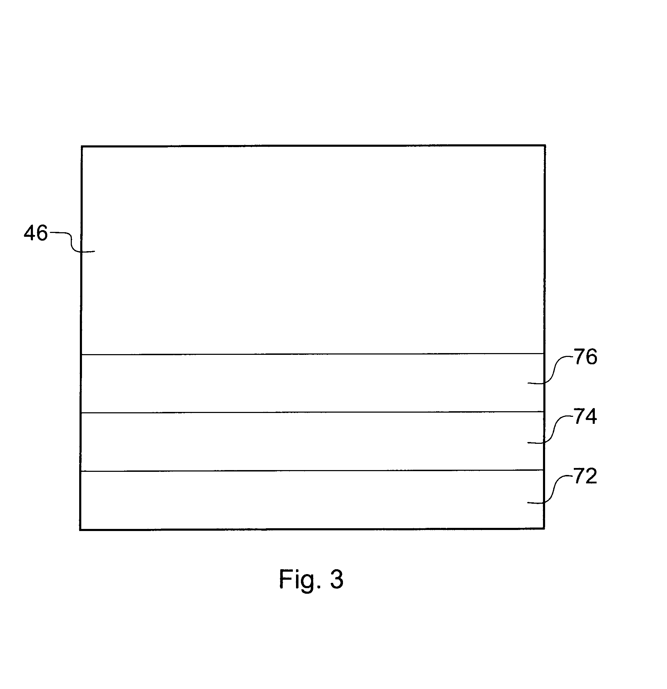

Figure 3 is a schematic representation of software elements held in the memory 46 of the computer 40 of Figure 2, in the case that this represents the web server 30. Figure 3 illustrates the operating system (OS) 72 and a programming platform, for example Java virtual machine 74, for implementing a website represented by code and/or data 76.

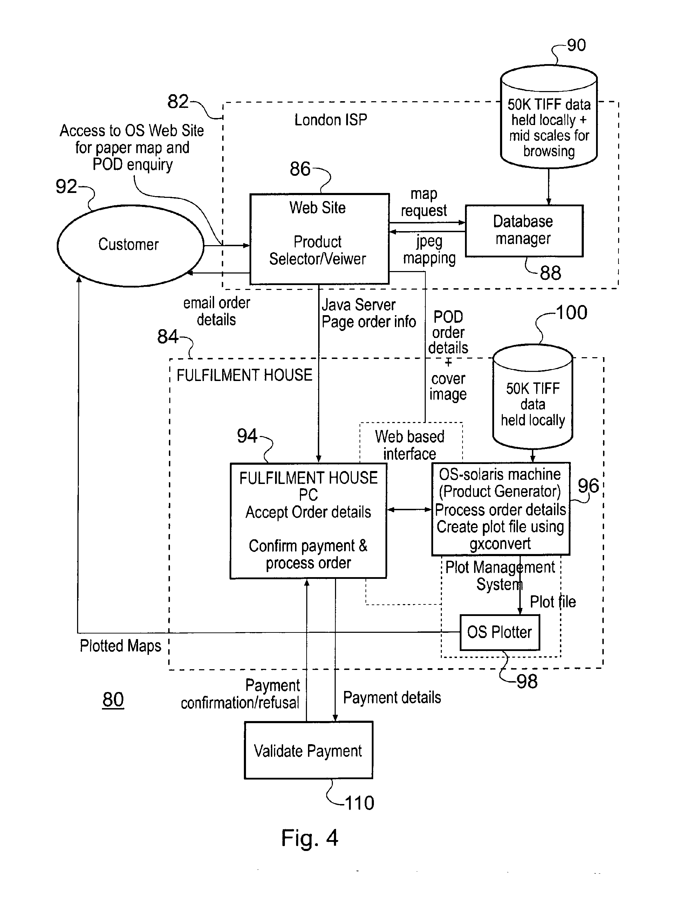

Figure 4 illustrates in more detail an example of an implementation of the present invention.

In Figure 4, the web server 30 of Figure 1 is formed by a server 82, which is programmed to implement a website 86 that forms a product selection and viewing mechanism. The web site can be implemented in any conventional manner, by way of example only using html pages with customisations using the JavaScript language. The web site 86 communicates via a database manager 88 with a database 90 that holds mapping data for a complete mapped region (e.g., Great Britain) in an appropriate data format. In one example, data for 1:50,000 maps is held as raster-type data in TIFF format, with further data for a smaller scale representation also being held. The volume of data for mapping, for example the whole of Great Britain uncompressed in TIFF format with 256 colours at 254 dpi (dots per inch - 1 inch = 25.4mm) at a scale of 1:50,000 is of the order of 12.5GB. If the data were stored at 300dpi, the size of the database would be of the order of 18GB. Accordingly, it will be appreciated that significant data is involved.

As an alternative to the use of raster based data, the database could instead be based on vectored data. Vectored mapping data (vector data) can be configured as a hierarchical structure of object definitions for mapped objects. The data could also be stored as structured, or polygonised data where a structured relationship between vectors combines to form polygons representing real world objects.

Figure 4 also represents a customer, or user, 92 at a client computer such as one of the client computers 24, 26 and 28 of Figure 1. The client computer communicates with the web site 86 on the web server 82 via the Internet in the present example.

In Figure 4, the fulfilment house 36, with the secure server 32 and the print server 34 is formed by the fulfilment house 84 with the fulfilment house secure server 94 and the fulfilment house print server 96. The fulfilment house print server 96 has access to a mirror version 100 of the database 90. The mirror database 100 and the web database 90 are maintained jointly to ensure complete mirroring.

As an alternative to the use of a mirror database 100, the print server 96 and the web site 86 could instead use a common database 90, subject to the relative locations of the web server 82 and the print server 96 and/or the availability of appropriate bandwidth, it being noted that a significant bandwidth would be required to avoid impacting performance.

The print server is provided with one or more plotters for plotting map files once processed by the print server on the basis of data retrieved from the mirror database 100. The details of selected map details are provided from the web site 86 to the print server 96 when the details have been selected and confirmed by the user.

The fulfilment house secure server 94 is operable to accept and process order details and to confirm payment and order processing. The fulfilment house secure server 94 is operable to communicate with the computer(s) 38 of a financial institution, represented in Figure 4 at 110, for obtaining confirmation or retrieval of payment details.

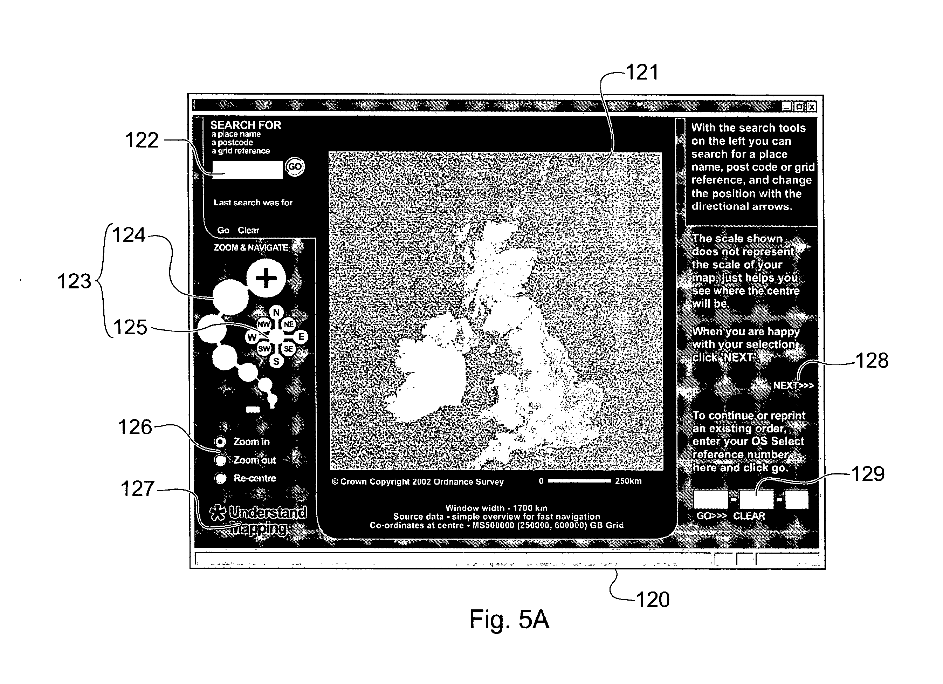

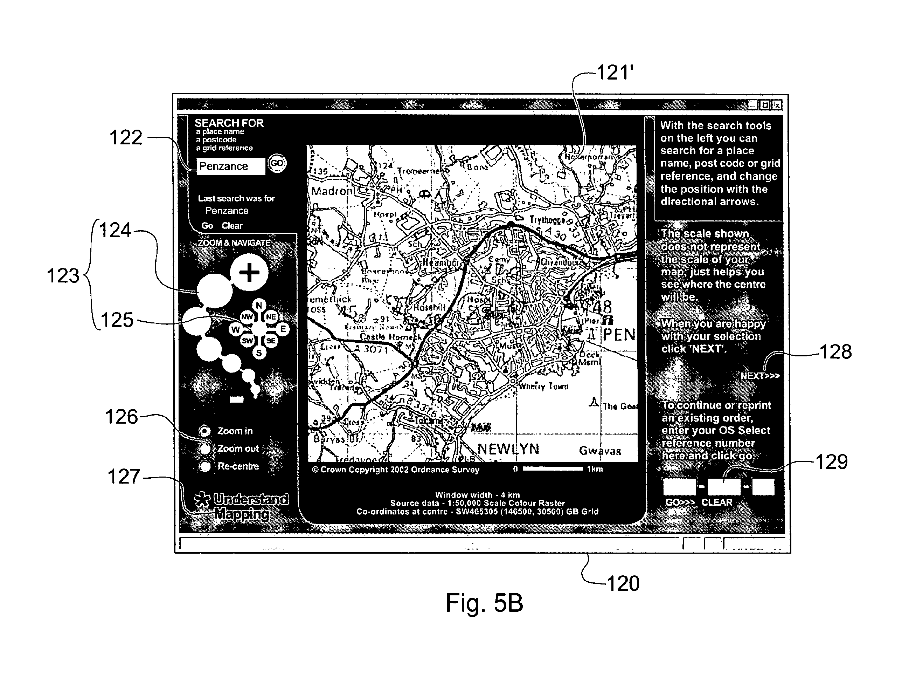

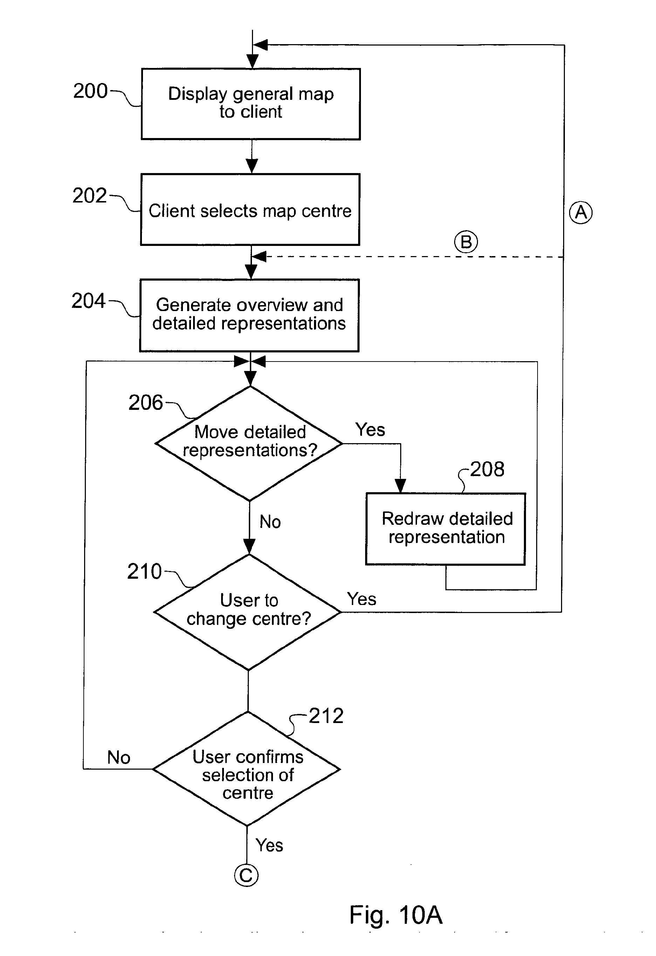

In the following a number of stages in an example of operation of the present invention will be described with reference to Figures 5 - 9, which are schematic representations of various screen shots, and Figures 10A - 10C, which are flow diagrams illustrating a method of operation of an embodiment of the present invention.

In Figure 10A, step 200 represents the display of a web page that enables a user to select an initial centre for a proposed map.

Figure 5A is a schematic representation of such a web page 120 as generated by software implementing the web site 86 on the web server 82. The web page can be generated using any appropriate web authoring languages and techniques. For example, the web pages described herein can be generated as html pages incorporating features programmed in a web authoring language such as the JavaScript language. The user at a client computer 92 is able to view the web page by accessing the web page 120 using conventional web browsing software (a browser).

The web page 120 shown in Figure 5A displays the territory 121 for which a map can be generated (in the present instance, Great Britain). It also provides various mechanisms for selecting a desired centre for a map. For example, a postal code (postcode), a grid reference or a place name could be inserted at 122. A dynamic pan and zoom tool 123 enables allows the user to zoom in and out by clicking on an appropriately sized dot in the snake, or chain 124 and to pan on the compass indicator 125 to relocate the map, for example by half a frame at a time in the selected direction. Radio buttons 126 enable the user to choose the function that is performed if the user clicks on the map at a particular location, including whether the user zooms in or out, or stays at the same level of zoom at the selected centre. Figure 5A also shows a link 127 for help, and well as a next button 128 to be clicked when the user has finished with the web page 120. If the user already has a user number, this can be inserted at 129.

As mentioned, selecting the next button 128 enables the user to indicate that he or she has selected the desired centre point for the proposed map.

Thus, returning to Figure 10A, in step 202, using various manipulations as described above, the user can home into a desired location, for example a hospital in Penzance in the south west of England as shown in the displayed area 121' in Figure 5B. Here it will be noted that the displayed area 121' of Figure 5B shows the largest viewing scale. It will be noted that the largest circle on the "snake" 124 is highlighted.

Following the various manipulations described above in step 202, the web site 86 is then operable in step 204 to generate an overview representation and a detailed representation of the proposed map centred on the centre point selected in step 202. These representations are generated by the web site 86 from the data in the database 90 retrieved using the database manager 88. To achieve this, the web site 86 computes the data it requires to generate the overview and detailed representations and then instructs the database manager to retrieve the selected information.

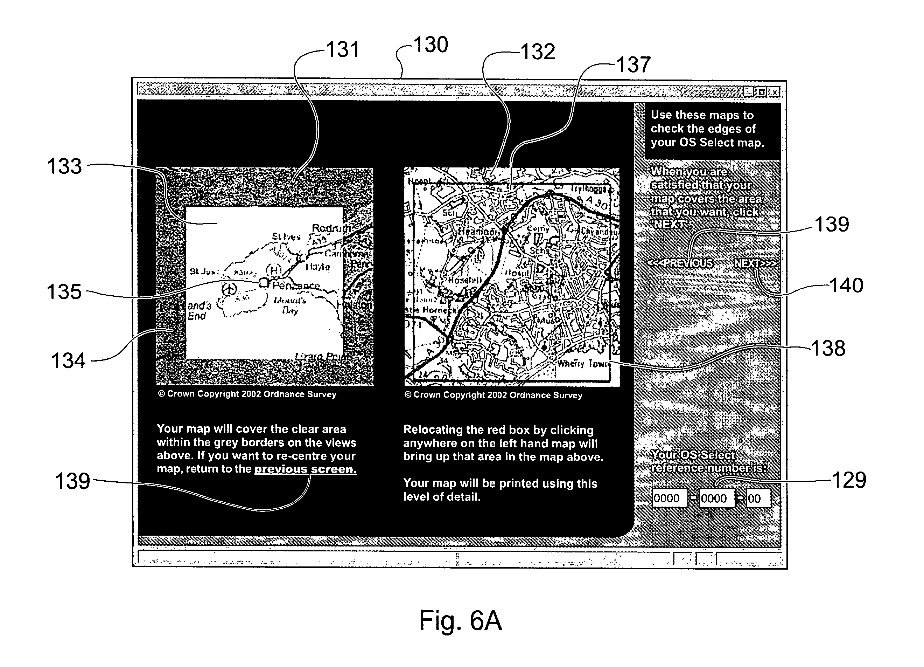

Figure 6A illustrates a web page 130 that includes an overview representation 131 and a detailed representation 132.

The overview representation 131 is shown on the left in the present example and displays the geographical limits, or periphery, of the proposed map 133 within the clear portion, and also displays a boundary zone 134 of a predetermined extent around the periphery of the clear zone. The boundary zone 134 could be indicated by a marker line (not shown) between the proposed map 133 and the boundary zone 134, although in the present case the boundary zone is illustrated by shading or otherwise differentiating the colour or tone of the boundary zone 134. It will be noted that the overview representation is shown in a small scale and with limited detail in order to enable the rapid generation of the overview representation 131.

A marked rectangular region (here a square 135 marked in a colour (e.g. red)) within the overview representation indicates the extent of the content 138 of the detailed representation 132, which is shown on the right in the present example. It will be noted in the present example that the boundary of the detailed representation is also marked by a square 138 marked in the same colour as in the overview representation (e.g. red). It will further be noted that the content 138 of the detailed representation 132 is shown in a larger scale and with more detail that the overview representation 131. In the present example, it is intended that the detailed representation 132 is advantageously shown full scale (e.g., 1:50,000) and with the full detail that will be generated on the proposed map so that the user is able to asses the full content of at least a part of the proposed map. Even where the detailed map does contain full detail, the generation of this small portion of the overall map can be generated at high speed.

Figure 6A, illustrates the initial display of the overview and detailed representations 131 and 132, wherein the detail is at the selected centre of the map so that the user can confirm that the exact centre of the proposed map is as he or she initially intended. However, the user may wish to check not only the centre of the proposed map, but also the detail to be found at the periphery of the proposed map.

The present invention provides the user with the possibility of checking the detail at and beyond the periphery of the proposed map.

With further reference to Figure 10A, this can be achieved in step 206 by clicking the mouse at a location within the displayed area of the overview representation 131.

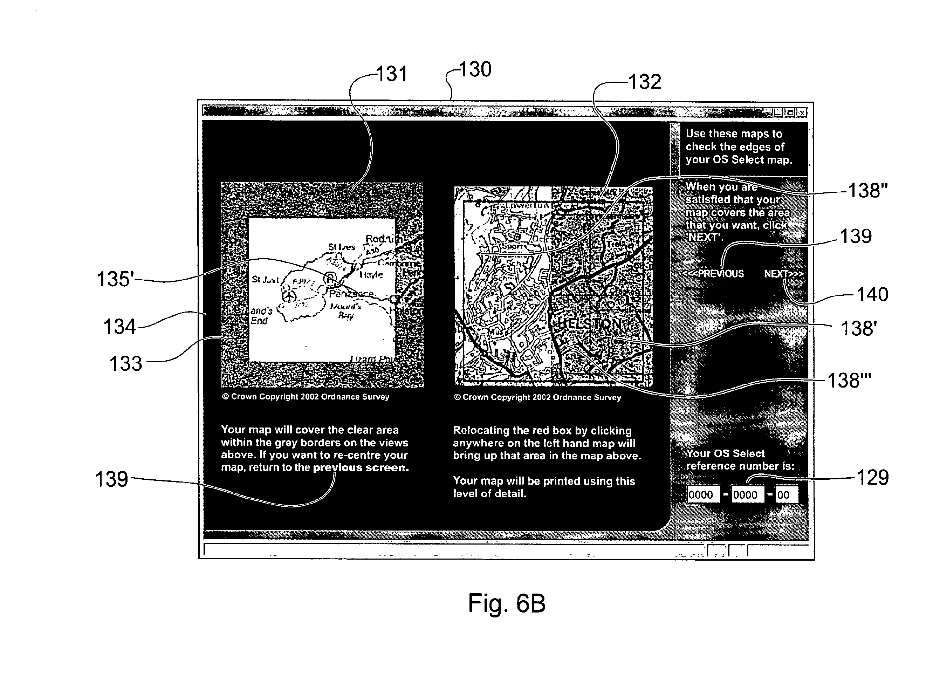

For example, if, as shown in Figure 6B, the mouse is clicked at the right hand periphery of the overview map 131 at a position 135', the web site 86 is operable to re-draw a detailed representation 132 for that location in step 208.

The redrawn detailed map 132' in Figure 6B shows that part of the town of Helston will be within 138" the proposed map, and part will be outside 138"' of the proposed map. In the example shown, where the map is centred on Penzance, it will be noted from the overview map 131 in Figures 6A and 6B that a lot of the selected map is the sea. Accordingly, the user may decide to move the centre of the map to ensure that the whole of Helston is included within the proposed map by moving the centre to the right (or East). All that would be lost at the left edge of the proposed map would be an area of the sea in this case, although the user could of course check what was on the left-hand periphery by clicking at that periphery.

If the user does decide to change the centre of the map, then by clicking, in step 210 (Figure 10A) on one of the hyperlinks 139 to the previous page, the user can return to step 200 and the web page shown in Figures 5A and 5B and can move the centre of the image. The user will then repeat the steps 202-206/208 of Figure 10A until satisfied with the centre and extent of the proposed map.

In the present example, the user returns to the web page of Figures 5A and 5B and control follows path A in Figure 10A. However, in another example, the web page shown in Figures 6A and 6B could also be provided with centring tools such as the tools 123 -126 shown in Figures 5A and 5B so that the movement of the centre could be achieved using the web pages of Figures 6A and 6B, in which case control could follow the path B shown in Figure 10A.

When the user is satisfied with the centre and extent of the proposed map, the user can then, in step 212 of Figure 10A, click on the next link 140 in Figures 6A and 6B.

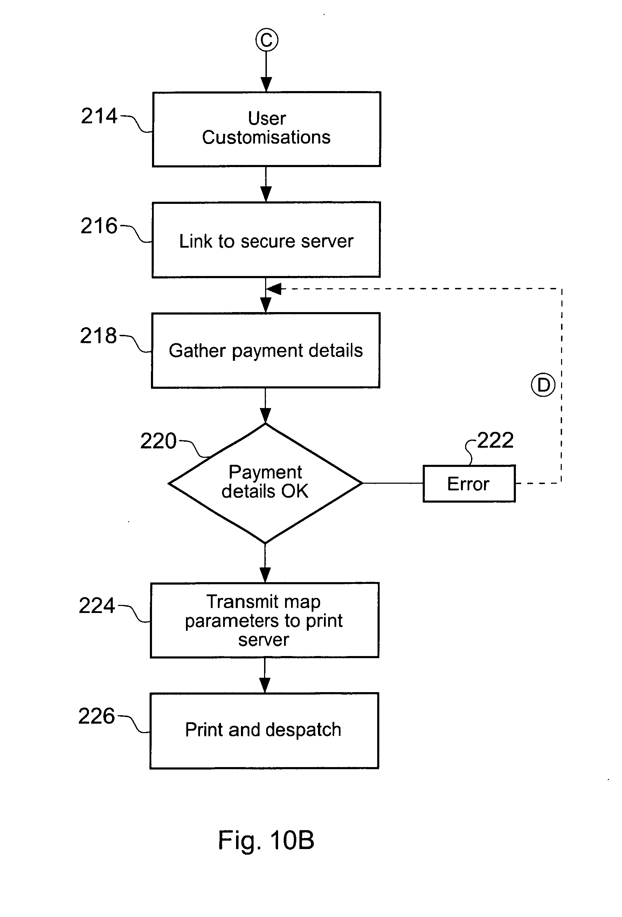

In step 214 in Figure 10B, the user is then able to select parameters for a presentation portion of the proposed map, in the present example, a strip down the left-hand side of the proposed map. However, in other examples, the user could select the position of the presentation portion.

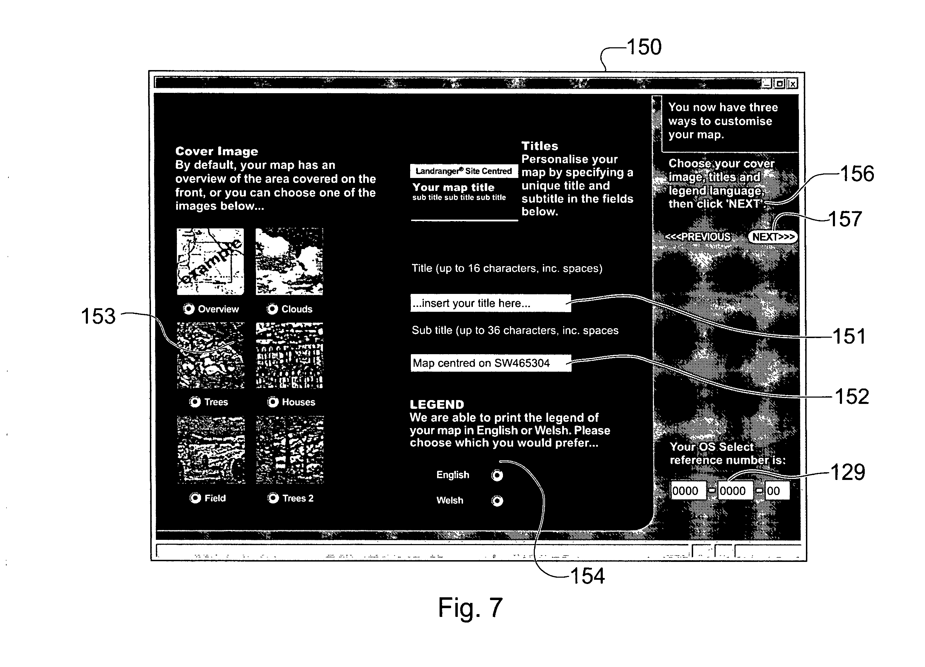

Figure 7 illustrates an example of a web page 150 for selecting parameters for the presentation portion for user customisation of the map to be printed.

In the present example the selectable parameters include a title for the map that can be entered at 151, a description for the map that can be entered at 152, an image to be printed on the map that can be selected at 153 and a language for legends to be printed in the presentation portion (in this example English or Welsh). It will be appreciated that in other examples, other languages could be catered for. Also, where the mapping data is in vector format, the language selection could also apply to textural descriptors accompanying features (e.g. ford/ cattle grid, spring, etc.) in the body of the map. Also, in another example the user could download his or her own images and/or place an image or logo at the particular position on the map, for example to indicate the location of the user's premises. Further, it will be appreciated that in other examples, other user selectable parameters could be entered, as will be described later.

Once the user has completed the entry of the user selectable parameters, the user can select the next button 157 to indicate completion of the user customisation.

Then in step 216 in Figure 10B, the web server generates a link to the secure server 94 at the fulfilment house 84. Through the link to the secure server 94, the user is then able in step 218 to enter payment details. The secure server is then operable to check the payment details in step 220 by an exchange with the server 110 at the financial institution. If the payment details do not check out in step 220, then in step 222, an error message is generated. This could be used internally by the fulfilment house and fulfilment house personnel could contact the user. Alternatively, an error message could be sent to the user indicating that the order cannot be fulfilled and requesting re-entry of payment details. Alternatively, if the secure server 94 reports to web site 86 that the payment is approved, then the web site 86 sends parameters for the map to be printed to the print server 96 in step 224.

The web site 86 sends a message to the print server 96 that specifies the details needed to print the map. These details of the map can include, for example, the centre of the map, the user customisations and the user details, including an account reference allocated by the web site 86. The account reference is allocated if none was entered at 192, or otherwise the entered value is checked and if correct, then that value is used. In step 226, the prints server computes the data for generating the map from the data in the mirror database 100 using the parameters supplied by web site 82, and prints the map. The map is then dispatched to the user.

As the actual printing of the map is done off line, the user is not aware of the time taken for computing and printing this (which could, for example, be of the order of 10-20 minutes per map). The user then receives the printed map by post or courier.

In other embodiment, rather than, or in addition to printing the map, the user could be supplied with an electronic version,. This could be stored on a medium, for example a compact disk (CD) or a Digital Versatile Disk (DVD), or it could be stored in a file for downloading by the user using an email, or an FTP link. Accordingly, although reference is made to a print server 96 in the above described example, the print server could also be described as a map generating server 96, particularly where the map is generated and supplied to the user in electronic form only.

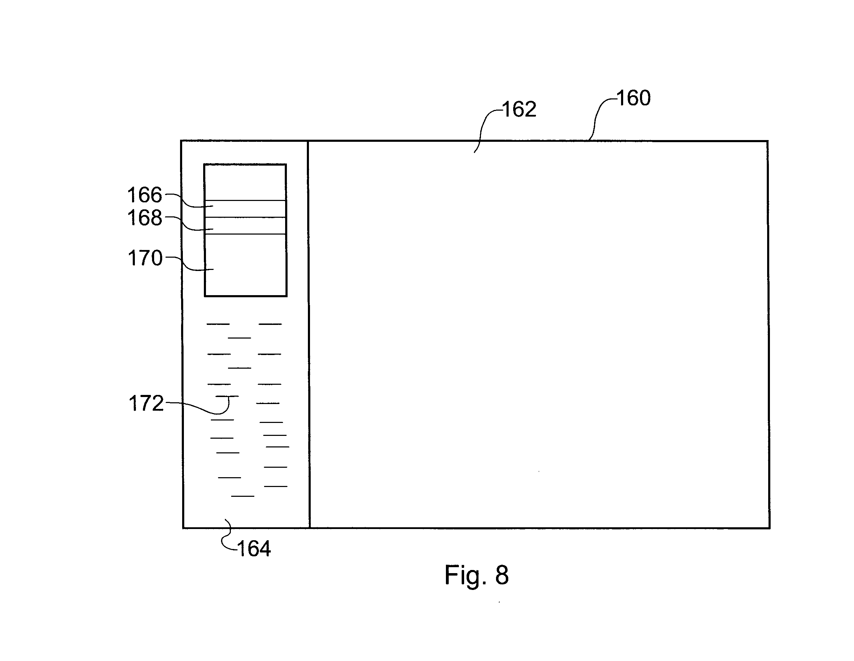

Figure 8 illustrates an example of a map 160 generated in accordance with the present invention. Figure 8 represents a 1:50,000 map 162 that is generated with a presentation area 164 at the left. The map 162 is centred at the user-specified location, and the presentation area 164 is customised by the user selections. The user selections can, for example, as described above with reference to Figures 7 and 10B, include a title 166 for the map, a description 168 for the map, an image 170 to be printed on the map and the language for legends 172 printed in the presentation area 164.

There has, therefore, been described a mechanism and method for the specification of customised maps on a computer system. A user can select a centre for a proposed map. An overview representation of the proposed map and a border around the proposed map is generated. Also generated is a detailed representation for an indicated part of the first representation. The user can change the part of the overview representation that is reproduced in the detailed representation in order to investigate the extent of the proposed map. In this manner, the user can investigate the exact extent of the proposed map in real time, as it is not necessary to calculate all the data for the complete map. The complete map can then be generated off-line following confirmation by the user of the parameters of the proposed map.

A computer program product for implementing the invention can be in the form of a computer program on a carrier medium. The carrier medium could be a storage medium, such as a solid state, magnetic, optical, magneto-optical or other storage medium. The carrier medium could be a transmission medium such as broadcast, telephonic, computer network, wired, wireless, electrical, electromagnetic, optical or indeed any other transmission medium.

It will be appreciated that many modifications and changes may be made to the described embodiment within the scope of the invention.

For example, although the print server and the secure server are described as being remote from the web server, this need not be the case, and in other examples these functions could be provided by one server or a cluster of servers at a single location. Also, the client computer could also be at the same location.

Also as mentioned above, other user customisations would be possible. For example, it may be described to generate maps that highlight particular interests. This could be done, for example, by overlaying information on a raster based map, or alternatively by suitable selection of vectored mapping objects in a vectored map data.

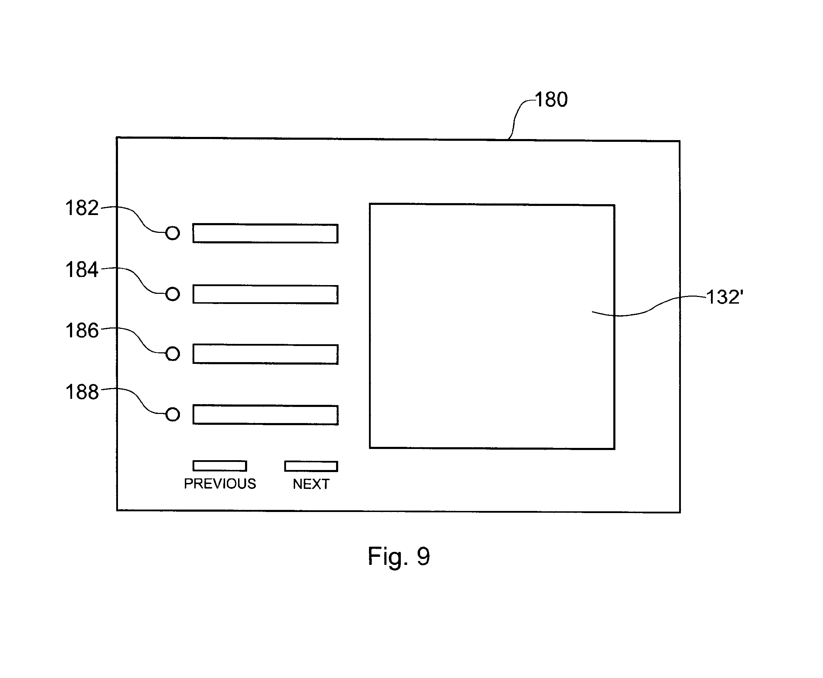

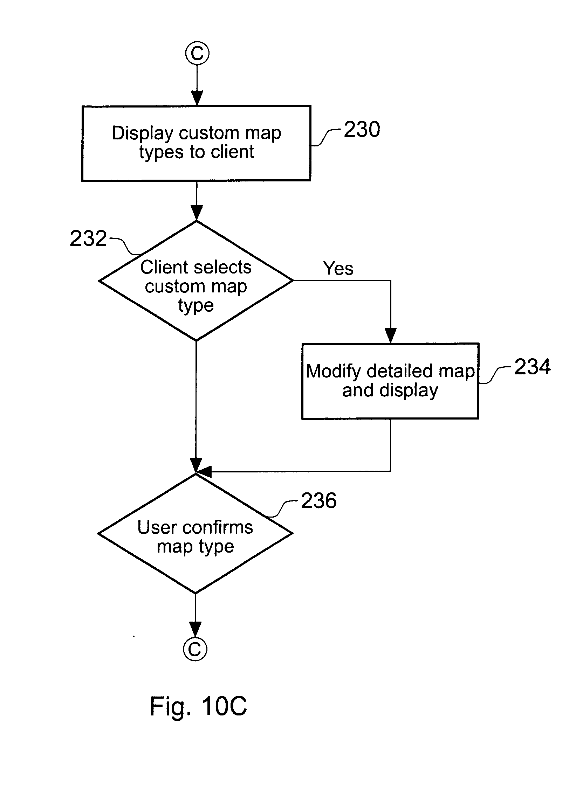

Figures 10C and 9 illustrate additional steps and a web page for the selection of such customisations.

The steps described in Figure 10C are, in this example, intended to be inserted between the steps of Figures 10A and 10B, that is between the marks "C".

In step 230, a web page 180 shown in Figure 9 is optionally displayed to the user. This includes a number of options for customisations. In the present example, five options are shown. The first option 182 is for cyclists, which will cause the highlighting (e.g. in a prominent colour) of cycle paths, the second 184 is for horse riders, which will cause the highlighting (e.g. in a prominent colour) of bridle ways, the third 186 is for those interested in historical monuments, which will cause the highlighting (e.g. in a prominent colour) of such monuments, and the fourth 188 is for those interested in visiting country pubs, which will cause the highlighting (e.g. in a prominent colour) of public houses in country districts. The fifth option is for no customisation. In each case the selection is made in step 232 in Figure 10C by clicking the appropriate radio button. If such a radio button is clicked, then in step 234, a detailed representation as, for example the detailed representation 132' of the last location selected in Figure 6A or 6B can be displayed. When the user has finished with this web page, the next link 190 could then be clicked in step 236.

Other options could be offered. For example, as mentioned above, the user could be given the option to request an electronic version of the map to be made available for downloading from the web site, or for an electronic version to be dispatched on a medium such as a CD or a DVD. Also, the user could be given the option to select the scale of the map to be generated. For example, if a 1:50,000 scale raster database is used, a scale range between say 1:63,360 (1 inch to the mile) and 1:30,000 can readily be generated by adjusting the size of the map and the printing density. Clearly, according to the manner in which the data is stored, other scales could be offered as well.

It will be appreciated that the selection of a particular customisation of this type could be made at other stages. For example, the web page of Figure 7, or the web page of Figures 5A and 5B could be provided, for example, with a pull down menu offering the user a selection of customisations of map parameter types, including an option of no map-type customisations.

## Claims

1. A graphical user interface for customised map generation on a computer system, the graphical user interface being operable:
- to enable user selection of a centre for a proposed map;
- to generate, for display to the user, at least a first representation in a first scale giving an overview of the extent of the proposed map plus a border region around the proposed map, and a second representation in a second scale giving a detailed view of the content of a sample area of the first representation, the first representation including an indication of the location of the sample area; and
- in response to user input, to move the indication of the sample area within the first representation and to display within the second representation the detailed view of the moved sample area.

2. The graphical user interface of claim 1, wherein the first scale is a smaller scale than that for the proposed map and the second scale is a larger scale than the first scale.

3. The graphical user interface of claim 2, wherein the second scale is the same scale as the proposed map.

4. The graphical user interface of any preceding claim wherein the proposed map is a 1:50,000-scale map.

5. The graphical user interface of any preceding claim wherein the scale of the proposed map is selectable.

6. The graphical user interface of any preceding claim, wherein the first representation includes reduced detail with respect to the proposed map and the second representation includes more detail than the first representation.

7. The graphical user interface of claim 6, wherein the second representation includes the same level of detail as the proposed map.

8. The graphical user interface of any preceding claim, wherein the boundary between the extent of the proposed map and the border region is displayed on the first representation.

9. The graphical user interface of any preceding claim, wherein the boundary between the extent of the proposed map and the border region is displayable in the second representation, where the second representation covers an area of the first representation including the border region.

10. The graphical user interface of preceding claim, wherein the border region is displayed in a contrasting manner to the area of proposed map on the first representation.

11. The graphical user interface of claim 10, wherein the border region is shaded.

12. The graphical user interface of any preceding claim, further operable to enable user selection of content for a presentation area for the proposed map.

13. The graphical user interface of claim 12, wherein the user selection of content comprises one or more of: selecting a title for the presentation area; selecting an image for the presentation area; selecting a language for legends for the presentation area; selecting textural descriptors accompanying features in the body of the map.

14. The graphical user interface of any preceding claim, further operable to enable user selection of one or more parameters of content types for the proposed map.

15. The graphical user interface of claim 14, wherein the content types are defined by vector data for generation of the proposed map according to a data type.

16. The graphical user interface of claim 14 or claim 15, further operable to generate the second representation to reflect the user selected parameters.

17. The graphical user interface of any preceding claim, further operable to enable user confirmation of the order for the proposed map and to initiate sending of a message to a map generating server.

18. The graphical user interface of claim 17, wherein the map generating server is a print server and the map is printed.

19. The graphical user interface of claim 17 or claim 18, further operable to provide a link to a secure server for the input of payment information.

20. A computer program comprising computer code for implementing the graphical user interface of any preceding claim.

21. A computer system for customised map generation, the computer system implementing the graphical user interface of any preceding claim, the computer system being operable:
- to enable user selection of a centre for a proposed map via the user interface;
- to respond to user selection of a map centre to access data storage and to determine data for generating the proposed map;
- to display to the user via the user interface at least a first representation in a first scale giving an overview of the extent of the proposed map plus a border region around the proposed map, and a second representation in a second scale giving a detailed view of the content of a sample area of the first representation, the first representation including an indication of the location of the sample area;
- to respond to user input to move the indication of the sample area within the first representation and to display within the second representation the detailed view of the moved sample area, and
- to respond to user confirmation of an order for a proposed map to initiate the generation of the map.

22. The computer system of claim 21, comprising a web server hosting a website, the web server being connected to a network for connection to at least one client computer via the network, the web server defining a user interface and responding to operations effected by the user at a client computer.

23. The computer system of claim 22, further comprising a map generating server, the web server being operable to respond to user confirmation of the order for the proposed map by sending a message to the map generating server defining the parameters of a proposed map to be generated.

24. The computer system of claim 23, wherein the map generating server is a print server and the map is printed.

25. The computer system of claim 23 or claim 24, wherein the map generating server is remote from the web server.

26. The computer system of any of claims 23 to 25, the computer system further comprising a secure server operable to process client payments, the secure server being operable to confirm completion of payment operations for authorising commencement of the generation of the proposed map by the map generating server.

27. The computer system of any of claims 21 to 26, wherein user input and displaying to a user is effected on a client computer connected to the server computer via a network.

28. The computer system of claim 27, wherein the network comprises the Internet.

29. A method of generating a customised computer generated map, the method comprising:
- generating a graphical user interface according to any one of claims 1 to 16;
- responding to user selection of a centre for a proposed map to access data storage and to determine data for generating a proposed map,
- displaying to the user, using the graphical user interface, at least the first representation in a first scale giving an overview of the extent of the proposed map plus a border region around the proposed map, and the second representation in a second scale giving a detailed view of the content of a sample area of the first representation, the first representation including an indication of the location of the sample area,
- responding to user input to move the indication of the sample area within the first representation and to display within the second representation the detailed view of the moved sample area.

30. The method of claim 29, further comprising responding to user confirmation of an order for a proposed map to initiate the generation of the map.

31. The method of claim 30, wherein confirmation of the order comprises supplying payment information.

32. The method of claim 31, wherein initiation of the generation of the map is effected on confirmation of payment for the order.

33. The method of any of claims 29 to 32 performed on a web server implementing a website.

34. The method of any of claims 29 to 33, comprising generating the proposed map on a map generating server remote from the web server.

35. The method of claim 34, wherein generating the map comprises printing the map on a printer managed by a print server remote from the web server.

36. The method of any of claims 29 to 35, wherein user input and displaying to a user is effected on a client computer connected to the server computer via a network.

37. The method of claim 36, wherein the network comprises the Internet.

38. A computer program comprising program code operable to perform the steps of the method of any of claims 29 to 37.

39. The computer program of claim 20 or claim 38 on a carrier medium.
